# EUROPÄISCHE PATENTSCHRIFT

(11) **EP 1 731 381 B1**
(45) Veröffentlichungstag und Bekanntmachung des Hinweises auf die Patenterteilung: **06.06.2012**
(21) Anmeldenummer: 06011948.4
(22) Anmeldetag: 09.06.2006
(51) Int. Cl.: B60R 21/2165, B60R 21/205

(54) **Airbageinrichtungsgrundmodul, Airbageinrichtung damit, Herstellungsverfahren und Herstellungswerkzeug für ein Airbageinrichtungsmodul**
Base module for an airbag device, associated airbag device, manufacturing method and manufacturing tool for an airbag module
Module de base pour un dispositif d'airbag, dispositif d'airbag associé, méthode de fabrication et outil pour fabrication d'un dispositif d'airbag

(30) Priorität: 09.06.2005 DE 102005026712
(43) Veröffentlichungstag der Anmeldung: 13.12.2006
(73) Patentinhaber: Volkswagen AG, 38440 Wolfsburg (DE)
(72) Erfinder: Azarian, Robin, 38442 Wolfsburg (DE); Leppla, Frank, 38112 Braunschweig (DE)
(74) Vertreter: Seeger · Seeger · Lindner Partnerschaft Patentanwälte

(56) Entgegenhaltungen:
- EP-A- 1 393 994
- WO-A-2004/009410
- DE-A1- 10 241 598
- DE-A1- 19 530 346
- DE-U1- 29 811 739

## Beschreibung

Die Erfindung betrifft ein Herstellungswerkzeug für ein Airbageinrichtungsgrundmodul gemäß dem Oberbegriff des Anspruchs 1, ein Herstellungsverfahren für ein Airbageinrichtungsgrundmodul gemäß dem Oberbegriff des Anspruchs 8, ein derart hergestelltes Airbageinrichtungsgrundmodul gemäß dem Oberbegriff des Anspruchs 19 sowie eine Airbageinrichtung mit einem solchen Airbageinrichtungsgrundmodul gemäß dem Oberbegriff des Anspruchs 44.

Aus der deutschen Gebrauchsmusterveröffentlichung DE 298 05 295 U1ist eine Instrumententafel für ein Kraftfahrzeug aus thermoplastischem Werkstoff bekannt. Darin ist ein Öffnungsbereich durch eine Querschnittsschwächung definiert, wo ein Schusskanal für einen Airbag montiert ist. Der Öffnungsbereich in der Instrumententafel definiert eine Airbagklappe, die durch ein Polymärscharnier mit dem Schusskanal verbunden ist. Bei der Herstellung ist in relativ aufwendiger Weise erforderlich, das Polymärscharnier zumindest am Öffnungsbereich in der Instrumententafel durch eine Materialverschweißung zu befestigen. Dabei ist es schwierig, diese Materialverschweißung sowohl hinsichtlich ihrer örtlichen Lage als auch hinsichtlich ihrer Festigkeit exakt und mit vorgegebenen Werten zuverlässig reproduzierbar sicherzustellen. Diese Materialverschweißung des Polymärscharniers mit der Airbagklappe erstellt aber einen wesentlichen Sicherheitsaspekt bei der Auslösung des Airbags dar, da damit nicht nur die Öffnungsbewegung der Airbagklappe zum Austritt des Airbags um das Polymärscharnier so festgelegt sein soll, dass ein Insasse nicht durch diese Bewegung der Airbagklappe verletzt wird, sondern muss insgesamt sicherstellen, dass die Airbagklappe nicht vollständig aus der Instrumententafel gedrückt und völlig haltlos gegen einen Insassen geschleudert wird.

Eine Instrumententafel mit einer in eine Öffnung davon eingesetzten und daran scharnierartig gehaltenen Airbagklappe ist aus der DE 44 21 820 A1 bekannt. Unter der Instrumententafel ist in Ausrichtung mit der Airbagklappe u. a. ein Schutzkanal angeordnet. Dabei ist es sehr aufwendig, die gesamte Instrumenttafel handhaben zu müssen, um die scharnierartige Verbindung mit der Airbagklappe herstellen zu können, was wiederum fertigungstechnische Probleme und schließlich Sicherheitsrisiken nach sich zieht.

Die US 6,742,803 B2 offenbart ein Airbagabdeckteil, das ein Airbageinrichtungsgrundmodul darstellt und einen Schusskanal sowie wenigstens eine Airbagklappe enthält, die in einer Austrittsöffnung des Schusskanals für einen Airbag liegt. Bei dieser Ausführung bestehen der Schusskanal und jede Airbagklappe aus demselben Material, so dass funktionsspezifischen Anforderungen nicht Rechnung getragen werden kann. Die Airbagklappe selbst ist lediglich durch Reißlinien im Material bestimmt und soll sich dort, wo keine Reißlinien vorhanden sind, bei Auslösung des Airbags in einen Fahrzeuginnenraum hinein zum Insassen hin aufbiegen. Jede solchermaßen geöffnete Airbagklappe stellt aber nicht zuletzt nach dem Öffnen wegen dadurch in den Fahrzeuginnenraum hinein zum Fahrzeuginsassen hin vorstehenden Kanten eine beachtliche Verletzungsgefahr dar, jedenfalls beispielsweise bei einem sog. Zweiten Aufschlag, in Folge dessen ein Insasse bei bereits wieder erschlafftem Airbag nochmals nach vorne geschleudert wird und auf die Airbagklappenkanten auftreffen kann. Diese Gestaltung des gesamten Airbagsystems und Fahrzeuginnenraums ist daher hinsichtlich der Insassensicherheit stark verbesserungswürdig.

Weiterhin ist aus der DE 195 30 346 A1 ein Deckel zur Abdeckung der Öffnung eines Airbagaufnahmeraums bekannt. An einem Grundkörper des Deckels ist wenigstens ein Halteband befestigt, das an seinem anderen Ende eine Befestigungslasche aufweist, mittels der es an einer Instrumententafel zu befestigen ist. Dadurch ist die Anbringung des Deckels in der Instrumententafel recht aufwendig.

Die EP 1 393 994 A1 betrifft eine Airbagabdeckung mit Verstärkung aus einem Kunststoffleichtbauteil. Dazu wird ein Kunststoffbauteil für eine Innenverkleidung eines Fahrzeugs offenbart, welches Kunststoffbauteil eine Airbagabdeckung enthält, wobei die Airbagabdeckung eine Verstärkung aufweist, welche mittels einer gewebeartigen Struktur an einem Schusskanal oder mit einer Fahrzeugrahmenkonstruktion verbunden ist. Die gewebeartige Struktur dient als Scharnier. Die Verstärkung ist ein mehrschichtiges Kunststoffleichtbauteil und weist eine Sandwichstruktur auf, welche eine Kernschicht und mindestens je eine Verstärkungsschicht umfasst, wobei die Kernschicht von den Verstärkungsschichten beidseitig begrenzt wird.

Die vorliegende Erfindung hat zum Ziel, ein Airbageinrichtungsgrundmodul, wie es aus der US 6,742,803 B2 oder aus der EP 1 393 994-A1 bekannt ist, dahingehend zu verbessern, dass bei weiterhin geringem Fertigungs- und Montageaufwand eine größere Insassensicherheit gewährleistet wird.

Dieses Ziel wird mit einem Herstellungswerkzeug für ein Airbageinrichtungsgrundmodul nach dem Anspruch 1 , einem Herstellungsverfahren für ein Airbageinrichtungsgrundmodul nach dem Anspruch 8, ein derart hergestelltes Airbageinrichtungsgrundmodul nach dem Anspruch 19 sowie eine Airbageinrichtung mit einem solchen Airbageinrichtungsgrundmodul nach dem Anspruch 44 erreicht.

Somit wird durch die Erfindung ein Herstellungswerkzeug für ein Airbageinrichtungsgrundmodul nach dem Anspruch 1 geschaffen, insbesondere für ein Airbageinrichtungsgrundmodulwie es nachstehend in zahlreichen Ausgestaltungsmöglichkeiten erläutert wurde, wobei Formhohlräume zur Befüllung mit Material zur Bildung des Schusskanals und des Airbagklappenträgers durch einen Halteraum zur Aufnahme des Gewebes verbunden sind, das teilweise in den Schusskanal und teilweise in den Airbagklappenträger eingegossen wird. Dabei ist ferner vorgesehen, dass ein Einsatz in den Halteraum zur Aufnahme des Gewebes hinein oder durch letzteren hindurch ragt, so dass mit einem in den Halteraum eingelegten Gewebe letzteres durch den Einsatz eine offene Gewebeschlaufe gebildet ist, wobei insbesondere dem Einsatz gegenüberliegend ein Aufnahmeraum zum Eingriff des mit dem Gewebe umgebenen Einsatzes vorgesehen ist, und/oder wobei bevorzugt dem Einsatz gegenüberliegend Druckmittel angeordnet sind, die zur engen Anlage des Gewebes an den Einsatz ausgelegt sind, ergänzt insbesondere dadurch, dass die Druckmittel eine Druckfeder enthalten. Im vorliegenden Zusammenhang kann ferner mit Vorzug vorgesehen sein, dass der Einsatz längenverstellbar ist. Weiterhin kann dabei vorzugsweise der Formhohlraum zur Befüllung mit Material zur Bildung eines Umfangsflansches des Schusskanals mit einer Materialeinspritzdüse versehen sein, die so angeordnet ist, dass das Material zum Bilden des Umfangsflansches in den Formhohlraum gegen das teilweise in den Formhohlraum eingelegte Gewebe von der Seite eingespritzt wird, die vom Umfangsflansch aus gesehen in Richtung des Verlaufs des Schusskanals weist. Alternativ oder zusätzlich zu der vorstehenden Ausgestaltungsmöglichkeit kann insbesondere vorgesehen sein, dass der Formhohlraum zur Befüllung mit Material zur Bildung des Airbagklappenträgers mit einer Materialeinspritzdüse versehen ist, die so angeordnet ist, dass das Material zum Bilden des Airbagklappenträgers in den Formhohlraum gegen das teilweise in den Formhohlraum eingelegte Gewebe von der Seite eingespritzt wird, die in den Schusskanal hinein weist.

Ferner wird durch die Erfindung ein Herstellungsverfahren für ein Airbageinrichtungsgrundmodul gemäß dem Anspruch 8 geschaffen, insbesondere für ein Airbageinrichtungsgrundmodul wie es nachstehend in zahlreichen Ausgestaltungsmöglichkeiten erläutert wurde, wobei das Gewebe teilweise in den Schusskanal und teilweise in den Airbagklappenträger durch Eingießen integriert wird, . Dabei wird beim Eingießen des Gewebes teilweise in den Schusskanal und teilweise in den Airbagklappenträger zwischen dem Schusskanal und dem Airbagklappenträger eine offene Gewebeschlaufe so gebildet, dass sie bei geschlossenem Airbagklappenträger in den fertigen Schusskanal hineinragt.

Dabei kann ferner insbesondere die Länge der offenen Gewebeschlaufe in Abhängigkeit von der Fertigungsart eines den Schusskanal und den Airbagklappenträger überdeckenden Oberteils eingestellt werden, wobei noch weiter bevorzugt die Länge der offenen Gewebeschlaufe für den Fall eines gespritzten Oberteils kürzer und für den Fall eines geschäumten Oberteils länger eingestellt wird.

Es ist ebenfalls bevorzugt, wenn beim Schusskanal um seine Austrittsöffnung ein Umfangsflansch gebildet wird, der zumindest in der Nähe der Austrittsöffnung wenigstens annähernd in derselben Ebene wie der Airbagklappenträger liegt. Dabei kann zusätzlich beim Bilden des Umfangsflansches das Gewebe teilweise in einen Formhohlraum eingelegt werden und Material zum Bilden des Umfangsflansches in den Formhohlraum gegen das Gewebe von der Seite eingespritzt werde, die vom Umfangsflansch aus gesehen in Richtung des Verlaufs des Schusskanals weist.

Noch eine andere bevorzugte Ausgestaltung besteht darin, dass beim Bilden des Airbagklappenträgers das Gewebe teilweise in einen Formhohlraum eingelegt wird und Material zum Bilden des Airbagklappenträgers in den Formhohlraum gegen das Gewebe von der Seite eingespritzt wird, die in den Schusskanal hinein weist. Alternativ oder zusätzlich kann vorgesehen sein, ein gemeinsames, einerseits den Airbagklappenträger und andererseits den Schusskanal um die Austrittsöffnung herum oder ggf. den Umfangsflansch des Schusskanals um die Austrittsöffnung herum überdeckendes Oberteil gebildet wird, das insbesondere eine Fahrzeuginnenverkleidung und vorzugsweise eine Instrumententafel bildet. Insbesondere kann das Oberteil durch Spritzen, Gießen oder Walzen von Kunststoff gebildet und weiter bevorzugt mit dem Schusskanal, vorzugsweise ggf. dessen Umfangsflansch, und/oder mit dem wenigstens einen Airbagklappenträger durch Schweißen verbunden werden. Alternativ kann mit Vorzug vorgesehen sein, dass das Oberteil durch Bilden eines Schaumträgers aus Kunststoff zum insbesondere Verschweißen mit dem Schusskanal, vorzugsweise ggf. dessen Umfangsflansch, und/oder mit dem wenigstens einen Airbagklappenträger, durch Schäumen einer Schaumschicht darauf und durch Aufbringen oder Bilden einer Außenhaut (Slush)darauf gebildet wird, wobei insbesondere zur Bildung des Schusskanals um dessen Austrittsöffnung ein Umfangsflansch, der zumindest in der Nähe der Austrittsöffnung wenigstens annähernd in derselben Ebene wie der Airbagklappenträger liegt, und ein rohrartiger Kanalabschnitt gebildet werden, und dass wenigstens eine Versteifung zwischen dem Kanalabschnitt und dem Umfangsflansch gebildet wird.

Noch eine weitere Ausgestaltungsvariante besteht mit Vorzug darin, dass der Schusskanal und/oder der Airbagklappenträger zumindest im wesentlichen aus Kunststoff gebildet werden/wird.

Weiterhin schafft die vorliegende Erfindung ein Airbageinrichtungsgrundmodul nach dem Anspruch 19.

Vorzugsweise Weiterbildungen davon bestehen darin, dass das Gewebe durch eine Gewebematte gebildet ist, und/oder dass das Gewebe an der gelenkigen Verbindung zwischen dem Schusskanal und dem Airbagklappenträger eine offene Gewebeschlaufe bildet, wobei die Länge der offenen Gewebeschlaufe in Abhängigkeit von der Fertigungsart eines den Schusskanal und den Airbagklappenträger überdeckenden Oberteils eingestellt ist, und wobei weiter bevorzugt die Länge der offenen Gewebeschlaufe für den Fall eines gespritzten Oberteils kürzer und für den Fall eines geschäumten Oberteils länger ist und/oder die offene Gewebeschlaufe bei geschlossener Airbagklappe in den Schusskanal hinein ragt.

Es kann ferner mit Vorzug vorgesehen sein, dass der Airbagklappenträger an seiner von dem Schusskanal weg weisenden Oberfläche Schweißrippen aufweist. Alternativ oder zusätzlich kann vorgesehen sein, dass der Schusskanal um seine Austrittsöffnung einen Umfangsflansch hat, der zumindest in der Nähe der Austrittsöffnung wenigstens annähernd in derselben Ebene wie der Airbagklappenträger liegt, wobei insbesondere der Airbagklappenträger eine geringere Dicke als der Umfangsflansch des Schusskanals hat und/oder der Umfangsflansch an seiner zumindest annähernd in der Ebene der Austrittsöffnung des Schusskanals liegenden Oberfläche Schweißrippen aufweist.

Eine weitere mögliche Ausgestaltung besteht darin, dass einerseits der Airbagklappenträger und andererseits der Schusskanal um die Austrittsöffnung herum oder der Umfangsflansch des Schusskanals um die Austrittsöffnung herum ein gemeinsames überdeckendes Oberteil haben, das insbesondere eine Fahrzeuginnenverkleidung und vorzugsweise eine Instrumententafel bildet. Dabei kann das Oberteil durch Spritzen, Gießen oder Walzen von Kunststoff gebildet und insbesondere mit dem Schusskanal, vorzugsweise ggf. dessen Umfangsflansch, und/oder mit dem wenigstens einen Airbagklappenträger durch Schweißen verbunden sein. Alternativ kann vorgesehen sein, dass das Oberteil einen Schaumträger aus Kunststoff zum insbesondere Verschweißen mit dem Schusskanal, vorzugsweise ggf. dessen Umfangsflansch, und/oder mit dem wenigstens einen Airbagklappenträger, eine Schaumschicht und eine Außenhaut (Slush) in dieser Reihenfolge vom Airbagklappenträger und ggf. Umfangsflansch aus betrachtet enthält, wobei insbesondere die Schweißrippen nur in den Schaumträger hinein ragen.

Weiterhin ist es bevorzugt, wenn das Gewebe teilweise in das Material des Schusskanals integriert ist, wie insbesondere durch Umspritzen, Umgießen und/oder Durchdringen, wobei insbesondere das Gewebe teilweise in das Material des Umfangsflansches des Schusskanals integriert ist, wie insbesondere durch Umgießen ; und weiter vorzugsweise das Gewebe in dem Umfangsflansch näher an seiner in der Ebene der Austrittsöffnung des Schusskanals liegenden Oberfläche als an seiner vom Umfangsflansch aus gesehen in Richtung des Verlaufs des Schusskanals weisenden Oberfläche liegt.

Noch weitere mit Vorzug vorgesehene Ausgestaltungen bestehen darin,
- dass das Gewebe teilweise in das Material des Airbagklappenträgers integriert ist, wie insbesondere durch Umgießen, und/oder
- dass das Gewebe in dem Airbagklappenträger näher an seiner von dem Schusskanal weg weisenden Oberfläche als an seiner in den Schusskanal hinein weisenden Oberfläche liegt, und/oder
- dass der Airbagklappenträger mittels des Gewebes schamierbandartig mit dem Schusskanal verbunden ist, und/oder
- dass zwei Airbagklappenträger vorhanden sind.

Eine andere bevorzugte Weiterbildung besteht darin, dass der Schusskanal um seine Austrittsöffnung einen Umfangsflansch, der zumindest in der Nähe der Austrittsöffnung wenigstens annähernd in derselben Ebene wie der Airbagklappenträger liegt, und einen rohrartigen Kanalabschnitt hat, und dass wenigstens eine Versteifung zwischen dem Kanalabschnitt und dem Umfangsflansch angeordnet ist, wobei insbesondere die Versteifung rippenartig und noch weiter bevorzugt zumindest im wesentlichen dreieckig ausgebildet ist, und/oder wobei mit Vorzug eine Mehrzahl von Versteifungen um den Umfang von Kanalabschnitt und Umfangsflansch angeordnet ist.

Es kann außerdem vorzugsweise vorgesehen sein, dass der Schusskanal und/oder der Airbagklappenträger zumindest im wesentlichen aus Kunststoff gebildet sind.

Durch die Erfindung wird ferner eine Airbageinrichtung nach dem Anspruch 44 geschaffen. Dabei kann mit weiterem Vorzug vorgesehen sein, dass der Airbag fest mit dem Gasgenerator verbunden ist, und dass der Gasgenerator relativ zu oder an dem Schusskanal befestigbar ist.

Weitere bevorzugte und/oder vorteilhafte Ausgestaltungen der Erfindung ergeben sich aus den gesamten vorliegenden Unterlagen sowie insbesondere den jeweils abhängigen Ansprüchen und deren Kombinationen.

Die Erfindung wird anhand von Ausführungsbeispielen, die lediglich exemplarisch und nicht beschränkend angegeben sind, nachfolgend unter Bezugnahme auf die Zeichnung näher erläutert. In der Zeichnung zeigen:
- Fig. 1: ein erstes Ausführungsbeispiel eines Airbageinrichtungsgrundmoduls mit einem einzelnen Airbagklappenträger in einer schematischen Querschnittsansicht,
- Fig. 2: ein zweites Ausführungsbeispiel eines Airbageinrichtungsgrundmoduls mit zwei Airbagklappenträgern in einer schematischen Querschnittsansicht,
- Fig. 3A: ein erstes Ausführungsbeispiel einer Airbageinrichtung mit einem einzelnen Airbagklappenträger und einem gespritzten Instrumententafel-Oberteil in einer schematischen Querschnittsansicht,
- Fig. 3B: der Ausschnitt A aus der Fig. 3A in einer vergrößerten Darstellung,
- Fig. 4A: ein zweites Ausführungsbeispiel einer Airbageinrichtung mit einem einzelnen Airbagklappenträger und einem geschäumten Instrumententafel-Oberteil in einer schematischen Querschnittsansicht,
- Fig. 4B: der Ausschnitt B aus der Fig. 4A in einer vergrößerten Darstellung,
- Fig. 5: einen wesentlichen Bereich eines Ausführungsbeispiels eines Werkzeuges zur Herstellung eines erfindungsgemäßen Airbageinrichtungsgrundmoduls in einer schematischen Querschnittsansicht,
- Fig. 5A: schematisch teilweise ein weiteres Ausführungsbeispiel eines Werkzeuges zur Herstellung eines erfindungsgemäßen Airbageinrichtungsgrundmoduls in einer perspektivischen Ansicht,
- Fig. 5B: schematisch einen vergrößerten Ausschnitt des Ausführungsbeispiels gemäß der Fig. 5A von einem Werkzeug zur Herstellung eines erfindungsgemäßen Airbageinrichtungsgrundmoduls in einer perspektivischen Ansicht,
- Fig. 5C: eine Variante eines Niederhalters des Ausführungsbeispiels gemäß den Fig. 5A und 5B von einem Werkzeug zur Herstellung eines erfindungsgemäßen Airbageinrichtungsgrundmoduls in einer schematischen perspektivischen Ansicht, und
- Fig. 6: ein drittes Ausführungsbeispiel eines Airbageinrichtungsgrundmoduls mit einem einzelnen Airbagklappenträger in einer schematischen perspektivischen Ansicht.

Anhand der nachfolgend beschriebenen und in der Zeichnung dargestellten Ausführungs- und Anwendungsbeispiele wird die Erfindung lediglich exemplarisch näher erläutert, d.h. sie ist nicht auf diese Ausführungs- und Anwendungsbeispiele oder auf die jeweiligen Merkmalskombinationen innerhalb der Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angeben und/oder dargestellt sind, sind nicht auf das Ausführungsbeispiel oder die Kombination mit den übrigen Merkmalen dieses Ausführungsbeispiels beschränkt, sondern können im Rahmen des technisch Möglichen, mit jeglichen anderen Varianten, auch wenn sie in den vorliegenden Unterlagen nicht gesondert behandelt sind, kombiniert werden.

Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Einzelne Ausgestaltungsmöglichkeiten und Varianten von Airbageinrichtungen, deren Komponenten und Herstellungsverfahren sowie -einrichtungen ergeben sich aus den vorherigen allgemeinen Darstellungen. Daraus ergeben sich ferner zahlreiche weitere Ausführungsbeispiele der vorliegenden Erfindung, und diese Ausführungsbeispiele aus den Merkmalskombinationen der vorherigen allgemeinen Darstellungen sind hiermit durch Bezugnahme auch Bestandteil der nun folgenden Befassung mit konkreten einzelnen Ausführungsbeispielen.

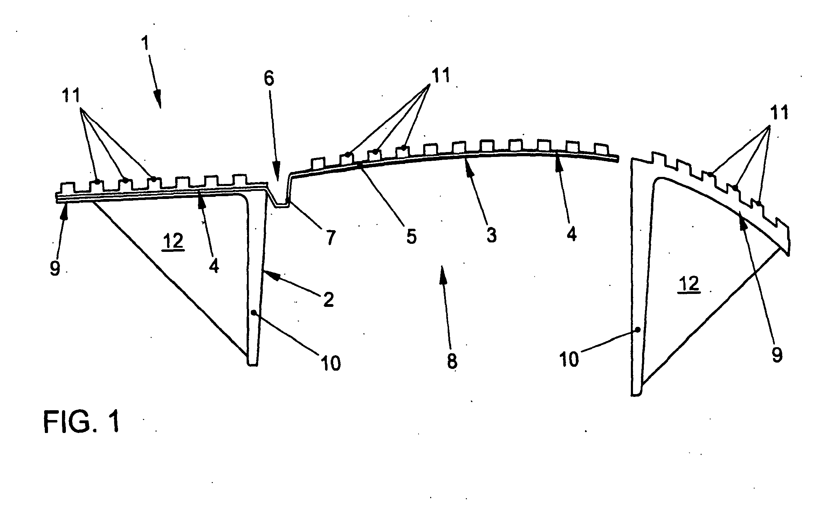

Ein erstes Ausführungsbeispiel eines Airbageinrichtungsgrundmoduls 1 mit einem Schusskanal 2 aus Kunststoff und einem Airbagklappenträger 3 ebenfalls aus Kunststoff ist in der Fig. 1 gezeigt. Der Airbagklappenträger 3 und der Schusskanal 2 sind mittels eines Gewebes 4 gelenkig oder scharnierartig miteinander verbunden. Bei dem Gewebe 4 handelt es sich um eine Gewebematte 5, beispielsweise in Bandform, wobei das Gewebematerial textilen Stoff und/oder Kunststoff enthalten kann. Das Gewebe 4 bildet zwischen dem Schusskanal 2 und dem Airbagklappenträger 3 eine gelenkige Verbindung 6, die eine offene Gewebeschlaufe 7 enthält. Wenn der Airbagklappenträger 3 in seiner geschlossenen Stellung ist, in der er, wie in der Fig. 1 gezeigt ist, in einer Austrittsöffnung 8 des Schusskanals 2 liegt, ragt die offene Gewebeschlaufe 7 in den Schusskanal hinein.

Der Schusskanal 2 enthält einen Umfangsflansch 9 und einen rohrartigen Kanalabschnitt 10. Jedenfalls zur Austrittsöffnung 8 des Schusskanals 2 hin liegen der Umfangsflansch 9 und der Airbagklappenträger 3 zumindest annähernd in derselben Ebene und bilden somit eine weitestgehend einheitliche Fläche, die jedoch hinsichtlich ihrer konkreten Form und Ausgestaltung an eine Fahrzeuginnenverkleidung (nicht gezeigt) angepasst ist, hinter der das Airbageinrichtungsgrundmodul 1 anzuordnen ist.

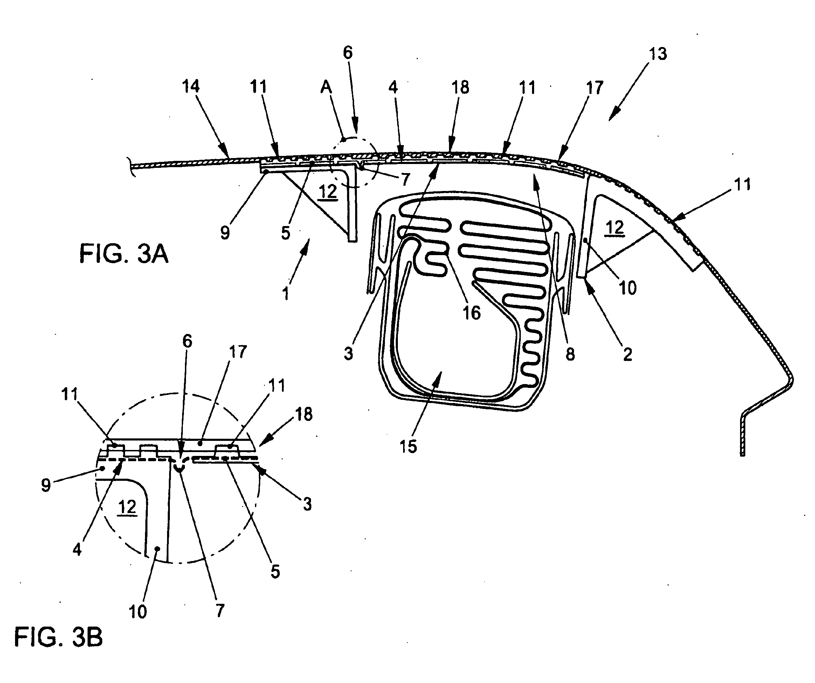

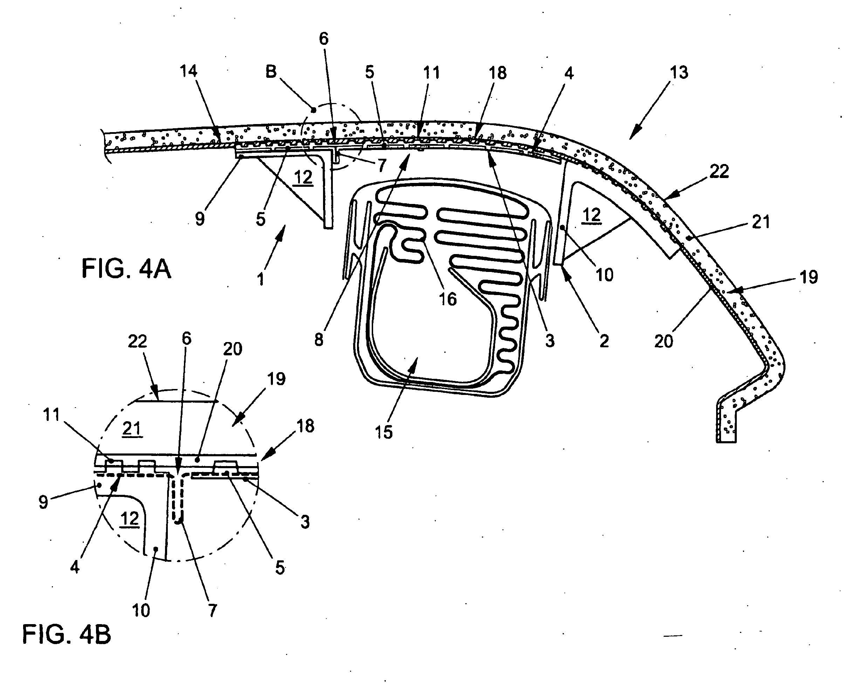

Der Umfangsflansch 9 des Schusskanals 2 und der Airbagklappenträger 3 enthalten an ihren Oberflächen, die entgegengesetzt zum Verlauf des Kanalabschnittes 10 des Schusskanals 2 vom Airbagklappenträger 3 aus gesehen liegen, Schweißrippen 11 auf, deren Funktion später im Zusammenhang mit den Fig. 3A, 3B und 4A, 4B näher erläutert wird. Zur Verbesserung der Stabilität enthält der Schusskanal 2 ferner rippenartige Versteifungen 12 von dreieckiger Form zum Abstützen von Kanalabschnitt 10 und Umfangsflansch 9 gegeneinander.

Dieses Airbageinrichtungsgrundmodul 1 ist einfach und kostengünstig herzustellen und weiter zu verarbeiten und schafft durch die gelenkige Verbindung 6 in Form der offenen Gewebeschlaufe 7 eine hohe Sicherheit im und durch den Betrieb einer damit ausgestatteten Airbageinrichtung (nicht gezeigt).

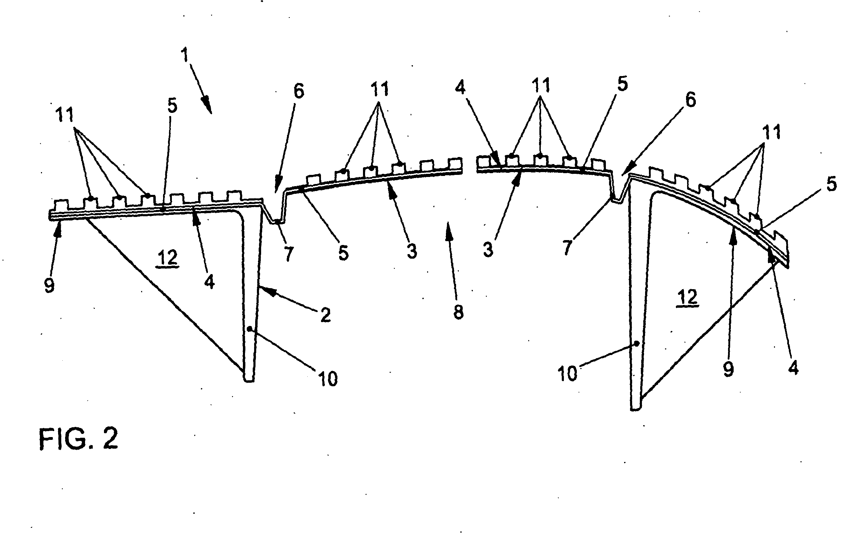

In der Fig. 2 ist ein zweites Ausführungsbeispiel eines Airbageinrichtungsgrundmoduls 1 in einem schematischen Querschnitt gezeigt. Der einzige Unterschied dieses zweiten Ausführungsbeispiels gegenüber dem ersten Ausführungsbeispiel, das in der Fig. 1 gezeigt ist, liegt darin, dass statt einem Airbagklappenträger 3 bei dem zweiten Ausführungsbeispiel gemäß der Fig. 2 zwei Airbagklappenträger 3 vorhanden sind, die an entgegengesetzten Seiten der Austrittsöffnung 8 in dem Schusskanal 2 mit letzterem jeweils durch eine eigene offenen Gewebeschlaufe 7 zur Bildung einer gelenkigen Verbindung 6 verbunden sind. Damit ragen die Airbagklappenträger im Verlauf ihrer Öffnungsbewegung beim Auslösen einer damit ausgestatteten Airbageinrichtung (nicht gezeigt) weniger weit in einen Fahrgastraum hinein zu einem Insassen hin vor, als ein einzelner Airbagklappenträger mit derselben Größe wie die beiden Airbagklappenträger 3 des zweiten Ausführungsbeispiels gemäß der Fig. 2 zusammen. Ferner kann durch vorsehen von zwei Airbagklappenträgern 3 statt nur einem Airbagklappenträger mit derselben Gesamtgröße in insbesondere im Fahrzeugbau vorteilhafter Weise Gewicht eingespart werden, da bei der Version mit zwei Airbagklappenträgern 3 in letzterem weniger Material enthalten ist, als in einem Airbagklappenträger mit derselben Gesamtgröße. Die geringere Größe jedes einzelnen Airbagklappenträgers 3, wenn davon zwei gemeinsam eine Austrittsöffnung 8 abschließen, und deren geringeres Gewicht führen auch zu besseren Werten bei einer Airbagauslösung. Dennoch können insbesondere Einbauraum und/oder Insassenschutzerfordernisse eine Version eines Airbageinrichtungsgrundmoduls 1 mit nur einem Airbagklappenträger 3 vorteilhaft oder sogar erforderlich machen. Das zweite Ausführungsbeispiel gemäß der Fig. 2 verdeutlicht somit, dass das Airbagklappeneinrichtungsgrundmodul 1 jedenfalls nicht auf eine Version mit nur einem Airbagklappenträger 3 beschränkt ist. Je nach Erfordernissen können auch mehr als zwei Airbagklappenträger enthalten sein.

Zur Vermeidung von bloßen Wiederholungen wird hinsichtlich der weiteren baulichen Merkmale des Airbageinrichtungsgrundmoduls 1 gemäß der Fig. 2 auf die entsprechende Beschreibung im Zusammenhang mit dem ersten Ausführungsbeispiel gemäß der Fig. 1 verwiesen.

In der Fig. 3A ist einem schematischen Querschnitt ein Ausführungsbeispiel einer Airbageinrichtung 13 in Verbindung mit einer Instrumententafel 14 gezeigt. Die Airbageinrichtung 13 enthält ein Airbageinrichtungsgrundmodul 1 gemäß dem ersten Ausführungsbeispiel eines Airbageinrichtungsgrundmoduls in der Fig. 1, und daher wird dieses Airbageinrichtungsgrundmodul 1 und seine Komponenten sowie Vorrichtungsmerkmale hier nicht noch mal detailliert erläutert, sondern wird diesbezüglich auf die Beschreibung der Fig. 1 verwiesen.

Die Airbageinrichtung 13 enthält neben dem Airbageinrichtungsgrundmodul 1 einen Gasgenerator 15 und einen Airbag 16. Der Airbag 16 ist fest mit dem Gasgenerator 15 verbunden, und der Gasgenerator ist relativ zu dem Schusskanal 2 an einer Fahrzeugstruktur (nicht gezeigt) befestigt. Alternativ könnte der Gasgenerator 15 auch direkt an dem Schusskanal 2 befestigt sein.

Bei der Instrumententafel 14 handelt es sich um ein gespritztes Oberteil 17, das aber beispielsweise durch Gießen oder Walzen geformt und hergestellt sein könnte. Dieses Oberteil 17 zur Bildung der Instrumententafel 14 besteht beim vorliegenden Ausführungsbeispiel aus Kunststoff. Das Airbageinrichtungsgrundmodul 1 ist bei diesem Ausführungsbeispiel gemäß der Fig. 3A mit dem gespritzten Oberteil 17 verschweißt. Es sind jedoch auch andere, dem Fachmann ohne weiteres bekannte Verbindungs- und Gestaltungsvarianten zum Verbinden des Airbageinrichtungsgrundmoduls 1 mit der Instrumententafel 14 oder der Herstellung der Instrumententafel 14 mit daran angebrachtem Airbageinrichtungsgrundmodul 1 möglich. Jedenfalls sorgen beim vorliegenden Ausführungsbeispiel gemäß der Fig. 3A die Schweißrippen 11 an den der Instrumententafel 14 zugewandten Seiten des Umfangsflansches 9 des Schusskanals 2 und des Airbagklappenträgers 3 für die Verbindung des Airbageinrichtungsgrundmoduls 1 insgesamt mit der Instrumententafel 14 oder allgemein dem gespritzten Oberteil 17. Durch die Verbindung des gespritzten Oberteils 17 mit dem Airbagklappenträger 3 wird eine Airbagklappe 18 gebildet.

In der Fig. 3B, die eine vergrößerte Darstellung des Ausschnittes A in der Fig. 3A ist, ist der Bereich der gelenkigen Verbindung 6 des Airbageinrichtungsgrundmoduls 1 der Airbageinrichtung 13 vergrößert dargestellt. Dabei ist gut zu erkennen, dass das Gewebe 4 einerseits teilweise in das Material des Schusskanals 2 und genauer in das Material des Umfangsflansches 9 des Schusskanals 2 und andererseits teilweise in das Material des Airbagklappenträgers 3 integriert ist. Dies kann bei der Herstellung von Schusskanal 2 und Airbagklappenträger 3 beispielsweise dadurch erreicht werden, dass deren Material das Gewebe 4 teilweise umfließt oder durchdringt, oder dass mit diesem Material das Gewebe 4 umspritzt wird. Wie ferner in der vergrößerten Darstellung der Fig. 3B gut zu erkenne ist, liegt das Gewebe 4 in dem Umfangsflansch 9 und in dem Airbagklappenträger 3 näher an deren dem gespritzten Oberteil 17 zugewandten Seite als an deren entgegengesetzter Seite. Damit wird eine besonders gute Haltbarkeit der Verbindung von Gewebe 4 einerseits und Umfangsflansch 9 des Schusskanals 2 sowie Airbagklappenträger 3 andererseits erreicht.

Ein zweites Ausführungsbeispiel einer Airbageinrichtung 13 ist in den Fig. 4A und 4B verdeutlicht. Auch diese Airbageinrichtung 13 enthält ein Airbageinrichtungsgrundmodul 1, wie es in der Fig. 1 dargestellt und im Zusammenhang damit oben erläutert wurde, so dass zur Vermeidung von Wiederholungen auf die entsprechenden Ausführungen Bezug genommen wird. Ebenfalls enthalten sind in der Airbageinrichtung 13 gemäß dem zweiten Ausführungsbeispiel, wie insbesondere der Fig. 4A zu entnehmen ist, ein Gasgenerator 15 und ein Airbag 16, die wiederum miteinander verbunden und bezüglich der Instrumententafel 14 und dem Airbageinrichtungsgrundmodul 1 ausgerichtet lagefixiert sind.

Im Gegensatz zu dem ersten Ausführungsbeispiel eine Airbageinrichtung gemäß den Fig. 3A und 3B ist die Instrumententafel 14 des zweiten Ausführungsbeispiels gemäß den Fig. 4A und 4B durch ein geschäumtes Oberteil 19 gebildet. Das geschäumte Oberteil 19 enthält einen Schaumträger 20, einen darüber angeordneten Schaum 21 und eine den Aufbau zum Fahrgastinnenraum hin abschließende Außenhaut 22, die auch Slush genannt wird. Bei diesem zweiten Ausführungsbeispiel einer Airbageinrichtung 13 ist der Schaumträger 20 durch Verschweißen mit dem Umfangsflansch 9 des Schusskanals 2 und dem Airbagklappenträger 3 verbunden, was wiederum durch die Schweißrippen 11 in vorteilhafter Weise begünstigt wird. Der detaillierte Aufbau der Kombination aus einerseits Umfangsflansch 9 des Schusskanals 2 und Airbagklappenträger sowie andererseits geschäumtem Oberteil 19 mit Schaumträger 20, Schaum 21 und Außenhaut 22 ist gut der Fig. 4B zu entnehmen, die eine vergrößerte Darstellung des Ausschnittes B in der Fig. 4A ist,.

Wie sich klar aus dem Vergleich der Fig. 3B und 4B ergibt, ist die offene Gewebeschlaufe 7 bei einer Bauart mit einem geschäumten Oberteil 19 länger ausgeführt als die offene Gewebeschlaufe 7 bei einer Bauart mit einem gespritzten Oberteil 17. Dies trägt dem Umstand Rechnung, dass eine Airbagklappe 18 aus einem Airbagklappenträger 3 mit einem geschäumten Oberteil 19 und auch das geschäumte Oberteil 19 um die Airbagklappe 18 herum dicker sind als bei einer Bauart mit einem gespritzten Oberteil 17, so dass die Airbagklappe 18 im Fall des geschäumten Oberteils 19 einen längeren Weg zurücklegen können muss, was durch die längere offene Gewebeschlaufe 7 in diesem Fall ermöglicht wird.

Ferner kann man bei Betrachtung der Fig. 3B und 4B deutlich erkennen, dass der Airbagklappenträger 3 eine geringere dicke als der Umfangsflansch 9 des Schusskanals 2 hat. Damit wird dem Umstand Rechnung getragen, dass der Airbagklappenträger 3 beim Auslösen der Airbageinrichtung 13 bewegt werden muss und daher so leicht wie möglich sein soll.

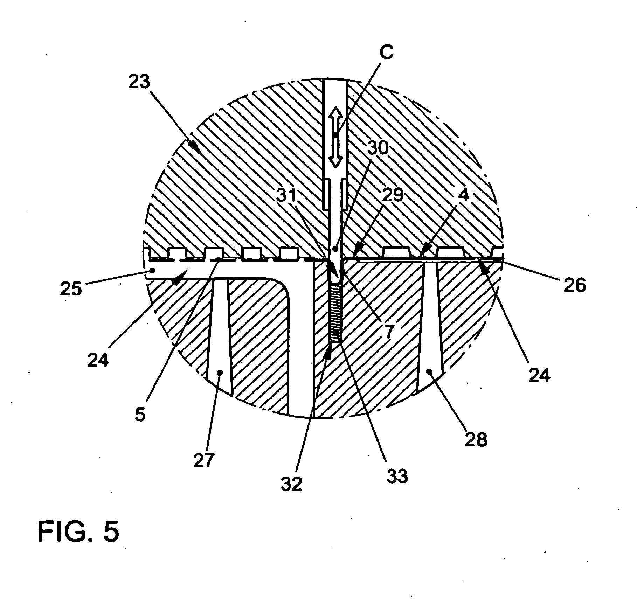

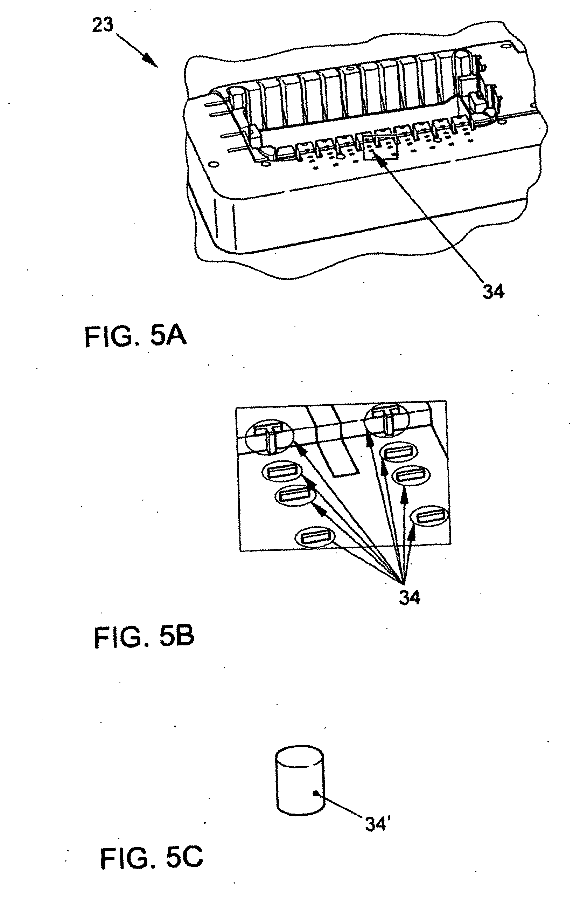

Ein Werkzeug 23 zur Herstellung eines Airbageinrichtungsgrundmoduls 1, beispielsweise gemäß dem ersten Ausführungsbeispiel, das in der Fig. 1 gezeigt ist, ist ausschnittweise in der Fig. 5 verdeutlicht. Das Werkzeug enthält eine Spritzform 24, die mit Formhohlräumen 25 und 26 für den Schusskanal 2 bzw. den Airbagklappenträger 3 versehen ist. In die Formhohlräume 25 und 26 münden düsenartige Einspritzkanäle 27 bzw. 28, durch die das Kunststoffmaterial zur Herstellung des Schusskanals 2 bzw. des Airbagklappenträgers 3 den Formhohlräumen 25 bzw. 26 zugeführt wird. Die Formhohlräume 25 und 26 enthalten alle Formmerkmale des Schusskanals 2 bzw. des Airbagklappenträgers 3. Die Einspritzkanäle 27 und 28 können auch als Materialeinspritzdüsen 27 und 28 bezeichnet werden.

Die Formhohlräume 25 und 26 sind durch einen Halteraum 29 zur Aufnahme des Gewebes 4 miteinander verbunden. Bei der Herstellung wird somit ein Gewebe 4, das insbesondere eine Bandartige Gewebematte 5 ist, so in das Werkzeug 23 eingelegt, dass es teilweise in den Formhohlraum 25 zur Bildung des Schusskanals 2 hineinragt und teilweise in den Formhohlraum 26 zur Bildung des Airbagklappenträgers 3 hineinragt und dazwischen durch den Halteraum 29 verläuft. Das Werkzeug 23 enthält ferner einen Einsatz 30, der dornartig ausgebildet ist und quer durch den Halteraum 29 verläuft.

Daraus Werkzeug 23 zum Einlegen des Gewebes 4, wie vorher beschrieben wurde, geöffnet und wieder geschlossen werden kann, drückt der Einsatz 30 beim Schließen des Werkzeuges 23 das Gewebe 4 im Bereich des Halteraums bezüglich der Darstellung in der Fig. 5 nach unten in einen Aufnahmeraum 31, wodurch die offene Gewebeschlaufe 7 gebildet und fixiert ist. In dem Aufnahmeraum 31 sitzen vorzugsweise Druckmittel 32, beispielsweise in Form einer Druckfeder 33, die für eine sichere Anlage des Gewebes 4 in dem Aufnahmeraum 31 gegen den Einsatz 30 sorgen. Die Druckmittel 32 sind insbesondere Ferner vorteilhaft, wenn der Einsatz 30 hinsichtlich seiner in den Aufnahmeraum 31 vorstehenden Länge einstellbar ist, wie durch den Doppelpfeil C verdeutlicht ist, da dann durch die Druckmittel 32 bei jeglicher Länge der offenen Gewebeschlaufe 7 ein sicheres Fixieren des Gewebes 4 in dem Aufnahmeraum 31 gegen den Einsatz 30 gewährleistet ist. Der besondere Vorteil eines einstellbaren Einsatzes 30 liegt darin, dass mit demselben Werkzeug 23 Airbageinrichtungsgrundmodule 1 hergestellt werden können, die eine kürzere oder längere offene Gewebeschlaufe 7 enthalten und daher entsprechend mit gespritzten Oberteilen 17 bzw. geschäumten Oberteilen 19 kombiniert werden können.

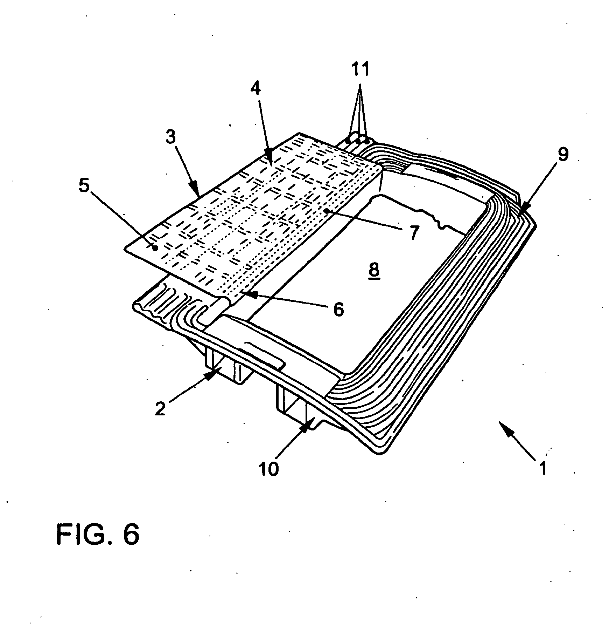

Wie ferner in der Fig. 5 deutlich zu erkennen ist, münden die Einspritzkanäle 27 und 28 auf einer Seite in den jeweiligen Formhohlraum 25 bzw. 26, die der späteren Oberfläche von Umfangsflansch 9 des Schusskanals 2 und Airbagklappenträger 3 mit den Schweißrippen 11 entgegengesetzt liegt. Dadurch wird schon im Herstellungsverfahren automatisch dafür Sorge getragen, dass das Gewebe 4 beim Einspritzen von Material zur Bildung des Schusskanals 2 und des Airbagklappenträgers 3 gegen die mit den Schweißrippen 11 versehene Seite des Umfangsflansches 9 des Schusskanals 2 und des Airbagklappenträgers 3 gedrückt und dort gehalten wird. Dadurch wird in besonders geschickter Weise die Lage des Gewebes 4 nahe den Seiten des Umfangsflansches 9 des Schusskanals 2 und des Airbagklappenträgers 3 mit den Schweißrippen sichergestellt, ohne dass hierfür gesonderte Maßnahmen und/oder Einrichtungen erforderlich wären. Die Lage des Gewebes 4 in dem Umfangsflansch 9 des Schusskanals 2 und in dem Airbagklappenträger nahe den Schweißrippen 11 ist für die Stabilität beim Auslösen der Airbageinrichtung 13 und insbesondere der Bewegung der Airbagklappe 18 aus der in den Fig. 3A und 4A ersichtlichen geschlossenen Lage in eine offene Lage, wie sie beispielsweise der Darstellung der Fig. 6 (siehe unten) zu entnehmen ist, von besonderem Vorteil.

Die Fig. 5A, 5B und 5C befassen sich mit einer Weiterbildung des Werkzeugs 23 zur Herstellung eines Airbageinrichtungsgrundmoduls 1 und damit des Verfahrens zur Herstellung eines Airbageinrichtungsgrundmoduls 1. Dabei zeigen die Fig. 5A schematisch teilweise ein weiteres Ausführungsbeispiel eines Werkzeuges zur Herstellung eines erfindungsgemäßen Airbageinrichtungsgrundmoduls in einer perspektivischen Ansicht mit Niederhaltern 34 und die Fig. 5B schematisch einen vergrößerten Ausschnitt D der Fig. 5A zur Verdeutlichung von Form, (relativer) Dimension und Anordnung der Niederhalter 34. Ferner zeigt die Fig. 5C eine Variante eines Niederhalters 34' des Ausführungsbeispiels gemäß den Fig. 5A und 5B von einem Werkzeug zur Herstellung eines erfindungsgemäßen Airbageinrichtungsgrundmoduls in einer schematischen perspektivischen Ansicht.

Die Niederhalter 34 bzw. 34' dienen dazu, um eine als Gewebe 4 verwendete Gewebematte 5 vor dem Einspritzen in dem Werkzeug 23 zu positionieren. Dies erfolgt in der Weise, dass nach dem Einlegen der Gewebematte 5 in das Werkzeug 23 die Niederhalter 34 bzw. 34', die beispielsweise als Stifte ausgebildet sein können, hydraulisch oder pneumatisch gegen die Gewebematte 5 verstellt oder bewegt werden, so dass letztere an einer vorgegebenen Position festgehalten wird. Dadurch wird erreicht, dass beim einseitigen Anspritzen, wenn die Gewebematte 5 keine entsprechend hohen Kräfte aufnehmen kann, sichergestellt wird, dass die Gewebematte 5 in die Kunststoffmasse von Schusskanal 2 und Airbagklappenträger 3 eingebettet wird, damit sie im Betrieb die geforderten Kräfte, d.h. die Kräfte zum Festhalten der Airbagklappe 18 bei deren Aufschwenken aufnehmen kann, ohne auszureißen.

In der Fig. 6 ist ein drittes Ausführungsbeispiel eines Airbageinrichtungsgrundmoduls 1 mit einem einzelnen Airbagklappenträger 3 in einer schematischen perspektivischen Ansicht gezeigt. Deutlich ist dabei erkennbar, dass der Airbagklappenträger 3 mittels des Gewebes 4, das als bandartige Gewebematte 5 ausgebildet ist, scharnierbandartig mit dem Umfangsflansch 9 des Schusskanals 2 verbunden ist. Hinsichtlich der weiteren Merkmale wird zur Vermeidung von Wiederholungen auf die Darstellung und Beschreibung insbesondere des ersten Ausführungsbeispiels der Fig. 1 verwiesen.

### BEZUGSZEICHENLISTE

- 1: Airbageinrichtungsgrundmodul
- 2: Schusskanal
- 3: Airbagklappenträger
- 4: Gewebe
- 5: Gewebematte
- 6: gelenkige Verbindung
- 7: offene Gewebeschlaufe
- 8: Austrittsöffnung
- 9: Umfangsflansch
- 10: rohrartiger Kanalabschnitt
- 11: Schweißrippen
- 12: Versteifung
- 13: Airbageinrichtung
- 14: Instrumententafel
- 15: Gasgenerator
- 16: Airbag
- 17: gespritztes Oberteil
- 18: Airbagklappe
- 19: geschäumtes Oberteil
- 20: Schaumträger
- 21: Schaum
- 22: Außenhaut / Slush
- 23: Werkzeug
- 24: Spritzform
- 25: Formhohlraum
- 26: Formhohlraum
- 27: Einspritzkanal
- 28: Einspritzkanal
- 29: Halteraum
- 30: Einsatz
- 31: Aufnahmeraum
- 32: Druckmittel
- 33: Druckfeder
- 34: Niederhalter
- 34': Niederhalter
- A: Ausschnitt
- B: Ausschnitt
- C: Doppelpfeil
- D: Ausschnitt

## Patentansprüche

1. Herstellungswerkzeug (23) für ein Airbageinrichtungsgrundmodul
wobei Formhohlräume (25, 26) zur Befüllung mit Material zur Bildung eines Schusskanals (2) und eines Airbagklappenträgers (3) und zur Aufnahme eines diese gelenkig verbindenden Gewebes (4) vorgesehen sind, das teilweise in den Schusskanal (2) und teilweise in den Airbagklappenträger (3) eingegossen wird.
**dadurch gekennzeichnet,**
**dass** die Formhohlräume (25, 26) durch einen Halteraum (29) zur Aufnahme des Gewebes (4) verbunden sind, und
**dass** ein Einsatz (30) in den Halteraum (29) zur Aufnahme des Gewebes (4) hinein oder durch letzteren hindurch ragt, so dass mit einem in den Halteraum (29) eingelegten Gewebe (4) letzteres durch den Einsatz (30) eine offene Gewebeschlaufe (7) gebildet ist.

2. Herstellungswerkzeug für ein Airbageinrichtungsgrundmodul nach Anspruch 1,
**dadurch gekennzeichnet,**
**dass** dem Einsatz (30) gegenüberliegend ein Aufnahmeraum (31) zum Eingriff des mit dem Gewebe (4) umgebenen Einsatzes (30) vorgesehen ist.

3. Herstellungswerkzeug für ein Airbageinrichtungsgrundmodul nach Anspruch 1 oder 2,
**dadurch gekennzeichnet,**
**dass** dem Einsatz (30) gegenüberliegend Druckmittel (32) angeordnet sind, die zur engen Anlage des Gewebes (4) an den Einsatz (30) ausgelegt sind.

4. Herstellungswerkzeug für ein Airbageinrichtungsgrundmodul nach Anspruch 3,
**dadurch gekennzeichnet,**
**dass** die Druckmittel (32) eine Druckfeder (33) enthalten.

5. Herstellungswerkzeug für ein Airbageinrichtungsgrundmodul nach einem der Ansprüche 2 bis 4,
**dadurch gekennzeichnet,**
**dass** der Einsatz (30) längenverstellbar ist.

6. Herstellungswerkzeug für ein Airbageinrichtungsgrundmodul nach einem der vorhergehenden Ansprüche,
**dadurch gekennzeichnet,**
**dass** der Formhohlraum (25) zur Befüllung mit Material zur Bildung eines Umfangsflansches (9) des Schusskanals (2) mit einer Materialeinspritzdüse (27) versehen ist, die so angeordnet ist, dass das Material zum Bilden des Umfangsflansches (9) in den Formhohlraum (25) gegen das teilweise in den Formhohlraum (25) eingelegte Gewebe (4) von der Seite eingespritzt wird, die vom Umfangsflansch (9) aus gesehen in Richtung des Verlaufs des Schusskanals (2) weist.

7. Herstellungswerkzeug für ein Airbageinrichtungsgrundmodul nach einem der vorhergehenden Ansprüche,
**dadurch gekennzeichnet,**
**dass** der Formhohlraum (26) zur Befüllung mit Material zur Bildung des Airbagklappenträgers (3) mit einer Materialeinspritzdüse (28) versehen ist, die so angeordnet ist, dass das Material zum Bilden des Airbagklappenträgers (3) in den Formhohlraum (26) gegen das teilweise in den Formhohlraum (26) eingelegte Gewebe (4) von der Seite eingespritzt wird, die in den Schusskanal (2) hinein weist.

8. Herstellungsverfahren für ein Airbageinrichtungsgrundmodul mit einem Schlusskanal (2) und in einer Austrittsöffnung des Schusskanals (2) für einen Airbag wenigstens einem Airbagklappenträger (3) einer Airbagklappe (18),
wobei ein Gewebe (4) teilweise in den Schusskanal (2) und teilweise in den Airbagklappenträger (3) durch Eingießen integriert wird,
**dadurch gekennzeichnet,**
**dass** beim Eingießen des Gewebes (4) teilweise in den Schusskanal (2) und teilweise in den Airbagklappenträger (3) zwischen dem Schusskanal (2) und dem Airbagklappenträger (3) eine offene Gewebeschlaufe (7) so gebildet wird, dass sie bei geschlossenem Airbagklappenträger (3) in den fertigen Schusskanal (2) hinein ragt.

9. Herstellungsverfahren für ein Airbageinrichtungsgrundmodul nach Anspruch 8,
**dadurch gekennzeichnet,**
**dass** die Länge der offenen Gewebeschlaufe (7) in Abhängigkeit von der Fertigungsart eines den Schusskanal (2) und den Airbagklappenträger (3) überdeckenden Oberteils (17; 19) eingestellt wird.

10. Herstellungsverfahren für ein Airbageinrichtungsgrundmodul nach Anspruch 9,
**dadurch gekennzeichnet,**
**dass** die Länge der offenen Gewebeschlaufe (7) für den Fall eines gespritzten Oberteils (17) kürzer und für den Fall eines geschäumten Oberteils (19) länger eingestellt wird.

11. Herstellungsverfahren für ein Airbageinrichtungsgrundmodul nach einem der Ansprüche 8 bis 10,
**dadurch gekennzeichnet,**
**dass** beim Schusskanal (2) um seine Austrittsöffnung (8) ein Umfangsflansch (9) gebildet wird, der zumindest in der Nähe der Austrittsöffnung (8) wenigstens annähernd in derselben Ebene wie der Airbagklappenträger (3) liegt.

12. Herstellungsverfahren für ein Airbageinrichtungsgrundmodul nach Anspruch 11,
**dadurch gekennzeichnet,**
**dass** beim Bilden des Umfangsflansches (9) das Gewebe (4) teilweise in einen Formhohlraum (25) eingelegt wird und Material zum Bilden des Umfangsflansches in den Formhohlraum (25) gegen das Gewebe (4) von der Seite eingespritzt wird, die vom Umfangsflansch (9) aus gesehen in Richtung des Verlaufs des Schusskanals (2) weist.

13. Herstellungsverfahren für ein Airbageinrichtungsgrundmodul nach einem der Ansprüche 8 bis 12,
**dadurch gekennzeichnet,**
**dass** beim Bilden des Airbagklappenträgers (3) das Gewebe (4) teilweise in einen Formhohlraum (26) eingelegt wird und Material zum Bilden des Airbagklappenträgers (3) in den Formhohlraum (26) gegen das Gewebe (4) von der Seite eingespritzt wird, die in den Schusskanal (2) hinein weist.

14. Herstellungsverfahren für ein Airbageinrichtungsgrundmodul nach einem der Ansprüche 8 bis 13,
**dadurch gekennzeichnet,**
**dass** ein gemeinsames, einerseits den Airbagklappenträger (3) und andererseits den Schusskanal (2) um die Austrittsöffnung (8) herum oder ggf. den Umfangsflansch (9) des Schusskanals (2) um die Austrittsöffnung (8) herum überdeckendes Oberteil (17; 19) gebildet wird, das insbesondere eine Fahrzeuginnenverkleidung und vorzugsweise eine Instrumententafel (14) bildet.

15. Herstellungsverfahren für ein Airbageinrichtungsgrundmodul nach Anspruch 14,
**dadurch gekennzeichnet,**
**dass** das Oberteil (17) durch Spritzen, Gießen oder Walzen von Kunststoff gebildet und insbesondere mit dem Schusskanal (2), vorzugsweise ggf. dessen Umfangsflansch (9), und/oder mit dem wenigstens einen Airbagklappenträger (3) durch Schweißen verbunden wird.

16. Herstellungsverfahren für ein Airbageinrichtungsgrundmodul nach Anspruch 14,
**dadurch gekennzeichnet,**
**dass** das Oberteil (19) durch Bilden eines Schaumträgers (20) aus Kunststoff zum insbesondere Verschweißen mit dem Schusskanal (2), vorzugsweise ggf. dessen Umfangsflansch (9), und/oder mit dem wenigstens einen Airbagklappenträger (3), durch Schäumen einer Schaumschicht (21) darauf und durch Aufbringen oder Bilden einer Außenhaut (Slush) (22) darauf gebildet wird.

17. Herstellungsverfahren für ein Airbageinrichtungsgrundmodul nach einem der Ansprüche 8 bis 16,
**dadurch gekennzeichnet,**
**dass** zur Bildung des Schusskanals (2) um dessen Austrittsöffnung (8) ein Umfangsflansch (9), der zumindest in der Nähe der Austrittsöffnung (8) wenigstens annähernd in derselben Ebene wie der Airbagklappenträger (3) liegt, und ein rohrartiger Kanalabschnitt (10) gebildet werden, und dass wenigstens eine Versteifung (12) zwischen dem Kanalabschnitt (10) und dem Umfangsflansch (9) gebildet wird.

18. Herstellungsverfahren für ein Airbageinrichtungsgrundmodul nach einem der Ansprüche 8 bis 17,
**dadurch gekennzeichnet,**
**dass** der Schusskanal (2) und/oder der Airbagklappenträger (3) zumindest im wesentlichen aus Kunststoff gebildet werden/wird.

19. Airbageinrichtungsgrundmodul (1), mit einem Schusskanal (2) und in einer Austrittsöffnung (8) des Schusskanals (2) für einen Airbag wenigstens einem Airbagklappenträger (3) einer Airbagklappe (18), wobei der Airbagklappenträger (3) separat vom Schusskanal (2) ist und mittels eines Gewebes (4) mit dem Schusskanal (2) gelenkig verbunden ist, und wobei das Gewebe (4) teilweise in den Schusskanal (2) und teilweise in den Airbagklappenträger (3) durch Eingieβen integriert ist,
**dadurch gekennzeichnet,**
**dass** das teilweise in den Schusskanal (2) und teilweise in den Airbagklappenträger (3) eingegossene Gewebe (4) zwischen dem Schusskanal (2) und dem Airbagklappenträger (3) eine offene Gewebeschlaufe (7) bildet, die bei geschlossener Airbagklappe (18) in den Schusskanal (2) hinein ragt, hergestellt nach einem der Ansprüche 8 bis 18.

20. Airbageinrichtungsgrundmodul nach Anspruch 19,
**dadurch gekennzeichnet,**
**dass** das Gewebe (4) durch eine Gewebematte (5) gebildet ist.

21. Airbageinrichtungsgrundmodul nach Anspruch 19 oder 20,
**dadurch gekennzeichnet,**
**dass** das Gewebe (4) an der gelenkigen Verbindung (6) zwischen dem Schusskanal (2) und dem Airbagklappenträger (3) eine offene Gewebeschlaufe (7) bildet.

22. Airbageinrichtungsgrundmodul nach Anspruch 21,
**dadurch gekennzeichnet,**
**dass** die Länge der offenen Gewebeschlaufe (7) in Abhängigkeit von der Fertigungsart eines den Schusskanal (2) und den Airbagklappenträger (3) überdeckenden Oberteils (17; 19) eingestellt ist.

23. Airbageinrichtungsgrundmodul nach Anspruch 22,
**dadurch gekennzeichnet,**
**dass** die Länge der offenen Gewebeschlaufe (7) für den Fall eines gespritzten Oberteils (17) kürzer und für den Fall eines geschäumten Oberteils (19) länger ist.

24. Airbageinrichtungsgrundmodul nach einem der Ansprüche 19 bis 23,
**dadurch gekennzeichnet,**
**dass** der Airbagklappenträger (3) an seiner von dem Schusskanal (2) weg weisenden Oberfläche Schweißrippen (11) aufweist.

25. Airbageinrichtungsgrundmodul nach einem der Ansprüche 19 bis 24,
**dadurch gekennzeichnet,**
**dass** der Schusskanal (2) um seine Austrittsöffnung (8) einen Umfangsflansch (9) hat, der zumindest in der Nähe der Austrittsöffnung (8) wenigstens annähernd in derselben Ebene wie der Airbagklappenträger (3) liegt.

26. Airbageinrichtungsgrundmodul nach Anspruch 25,
**dadurch gekennzeichnet,**
**dass** der Airbagklappenträger (3) eine geringere Dicke als der Umfangsflansch (9) des Schusskanals (2) hat.

27. Airbageinrichtungsgrundmodul nach Anspruch 25 oder 26,
**dadurch gekennzeichnet,**
**dass** der Umfangsflansch (9) an seiner zumindest annähernd in der Ebene der Austrittsöffnung (8) des Schusskanals (2) liegenden Oberfläche Schweißrippen (11) aufweist.

28. Airbageinrichtungsgrundmodul nach einem der Ansprüche 19 bis 27,
**dadurch gekennzeichnet,**
**dass** einerseits der Airbagklappenträger (3) und andererseits der Schusskanal (2) um die Austrittsöffnung (8) herum oder der Umfangsflansch (9) des Schusskanals (2) um die Austrittsöffnung (8) herum ein gemeinsames überdeckendes Oberteil (17; 19) haben, das insbesondere eine Fahrzeuginnenverkleidung und vorzugsweise eine Instrumententafel (14) bildet.

29. Airbageinrichtungsgrundmodul nach Anspruch 28,
**dadurch gekennzeichnet,**
**dass** das Oberteil (17) durch Spritzen, Gießen oder Walzen von Kunststoff gebildet und insbesondere mit dem Schusskanal (2), vorzugsweise ggf. dessen Umfangsflansch (9), und/oder mit dem wenigstens einen Airbagklappenträger (3) durch Schweißen verbunden ist.

30. Airbageinrichtungsgrundmodul nach Anspruch 28,
**dadurch gekennzeichnet,**
**dass** das Oberteil (19) einen Schaumträger (20) aus Kunststoff zum insbesondere Verschweißen mit dem Schusskanal (2), vorzugsweise ggf. dessen Umfangsflansch (9), und/oder mit dem wenigstens einen Airbagklappenträger (3), eine Schaumschicht (21) und eine Außenhaut (Slush) (22) in dieser Reihenfolge vom Airbagklappenträger (3) und ggf. Umfangsflansch (9) aus betrachtet enthält.

31. Airbageinrichtungsgrundmodul nach Anspruch 29 in Verbindung mit Anspruch 24 oder 27,
**dadurch gekennzeichnet,**
**dass** die Schweißrippen (11) nur in den Schaumträger (20) hinein ragen.

32. Airbageinrichtungsgrundmodul nach einem der Ansprüche 19 bis 31,
**dadurch gekennzeichnet,**
**dass** das Gewebe (4) teilweise in das Material des Schusskanals (2) integriert ist, wie insbesondere durch, Umgießen.

33. Airbageinrichtungsgrundmodul nach Anspruch 32 in Verbindung mit einem der Ansprüche 25 bis 31,
**dadurch gekennzeichnet,**
**dass** das Gewebe (4) teilweise in das Material des Umfangsflansches (9) des Schusskanals (2) integriert ist, wie insbesondere durch Umgießen .

34. Airbageinrichtungsgrundmodul nach Anspruch 33,
**dadurch gekennzeichnet,**
**dass** das Gewebe (4) in dem Umfangsflansch (9) näher an seiner in der Ebene der Austrittsöffnung (8) des Schusskanals (2) liegenden Oberfläche als an seiner vom Umfangsflansch (9) aus gesehen in Richtung des Verlaufs des Schusskanals (2) weisenden Oberfläche liegt.

35. Airbageinrichtungsgrundmodul nach einem der Ansprüche 19 bis 34,
**dadurch gekennzeichnet,**
**dass** das Gewebe (4) teilweise in das Material des Airbagklappenträgers (3) integriert ist, wie insbesondere durch Umgießen.

36. Airbageinrichtungsgrundmodul nach einem der Ansprüche 19 bis 35,
**dadurch gekennzeichnet,**
**dass** das Gewebe (4) in dem Airbagklappenträger (3) näher an seiner von dem Schusskanal (2) weg weisenden Oberfläche als an seiner in den Schusskanal (2) hinein weisenden Oberfläche liegt.

37. Airbageinrichtungsgrundmodul nach einem der Ansprüche 19 bis 36,
**dadurch gekennzeichnet,**
**dass** der Airbagklappenträger (3) mittels des Gewebes (4) schamierbandartig mit dem Schusskanal (2) verbunden ist.

38. Airbageinrichtungsgrundmodul nach einem der Ansprüche 19 bis 37,
**dadurch gekennzeichnet,**
**dass** zwei Airbagklappenträger (3) vorhanden sind.

39. Airbageinrichtungsgrundmodul nach einem der Ansprüche 19 bis 38,
**dadurch gekennzeichnet,**
**dass** der Schusskanal (2) um seine Austrittsöffnung (8) einen Umfangsflansch (9), der zumindest in der Nähe der Austrittsöffnung (8) wenigstens annähernd in derselben Ebene wie der Airbagklappenträger (3) liegt, und einen rohrartigen Kanalabschnitt (10) hat, und dass wenigstens eine Versteifung (12) zwischen dem Kanalabschnitt (10) und dem Umfangsflansch (9) angeordnet ist.

40. Airbageinrichtungsgrundmodul nach Anspruch 39,
**dadurch gekennzeichnet,**
**dass** die Versteifung (12) rippenartig ausgebildet ist.

41. Airbageinrichtungsgrundmodul nach Anspruch 40,
**dadurch gekennzeichnet,**
**dass** die rippenartige Versteifung (12) zumindest im wesentlichen dreieckig ausgebildet ist.

42. Airbageinrichtungsgrundmodul nach Anspruch 40 oder 41,
**dadurch gekennzeichnet,**
**dass** eine Mehrzahl von Versteifungen (12) um den Umfang von Kanalabschnitt (10) und Umfangsflansch (9) angeordnet ist.

43. Airbageinrichtungsgrundmodul nach einem der Ansprüche 19 bis 42,
**dadurch gekennzeichnet,**
**dass** der Schusskanal (2) und/oder der Airbagklappenträger (3) zumindest im wesentlichen aus Kunststoff gebildet sind.

44. Airbageinrichtung (13), mit einem Gasgenerator (15) und einem Airbag (16), die hinter wenigstens einer Airbagklappe (18) angeordnet sind, die infolge eines Auslösens des Gasgenerators (15) und/oder **dadurch** Aufblasens des Airbags (16) zu öffnen ist, um den Airbag (16) durch die durch das Öffnen der Airbagklappe (18) frei gewordene Austrittsöffnung (8) austreten zu lassen,
**dadurch gekennzeichnet,**
**dass** ferner ein Airbageinrichtungsgrundmodul (1) nach einem der Ansprüche 19 bis 43 enthalten ist.

45. Airbageinrichtung nach Anspruch 44,
**dadurch gekennzeichnet,**
**dass** der Airbag (16) fest mit dem Gasgenerator (15) verbunden ist, und dass der Gasgenerator (15) relativ zu oder an dem Schusskanal (2) befestigbar ist.

## Claims

1. Manufacturing tool (23) for an airbag device base module,
there being provided mould cavities (25, 26) to be filled with material for forming a deployment channel (2) and an airbag cover support (3) and for accommodating a fabric (4) joining these together in an articulated manner, which fabric is moulded partly into the deployment channel (2) and partly into the airbag cover support (3),
**characterized in that**
the mould cavities (25, 26) are connected by a holding space (29) for accommodating the fabric (4), and
an insert (30) projects into or through the holding space (29) for accommodating the fabric (4), such that with a fabric (4) inserted into the holding space (29) the former is formed by the insert (30) into an open fabric loop (7).

2. Manufacturing tool for an airbag device base module according to Claim 1,
**characterized in that**
opposite the insert (30) there is provided a receiving space (31) for engagement of the insert (30) surrounded with the fabric (4).

3. Manufacturing tool for an airbag device base module according to Claim 1 or 2,
**characterized in that**
opposite the insert (30) there are arranged (32) pressure means, which are designed to apply the fabric (4) closely against the insert (30).

4. Manufacturing tool for an airbag device base module according to Claim 3,
**characterized in that**
the pressure means (32) include a compression spring (33).

5. Manufacturing tool for an airbag device base module according to one of Claims 2 to 4,
**characterized in that**
the insert (30) is of adjustable length.

6. Manufacturing tool for an airbag device base module according to one of the preceding claims,
**characterized in that**
the mould cavity (25) to be filled with material to form a circumferential flange (9) of the deployment channel (2) is provided with a material injection nozzle (27), which is arranged in such a way that the material for forming the circumferential flange (9) is injected into the mould cavity (25) towards the fabric (4) inserted partly into the mould cavity (25) from the side pointing in the direction in which the deployment channel (2) extends when viewed from the circumferential flange (9).

7. Manufacturing tool for an airbag device base module according to one of the preceding claims,
**characterized in that**
the mould cavity (26) to be filled with material to form the airbag cover support (3) is provided with a material injection nozzle (28), which is arranged in such a way that the material for forming the airbag cover support (3) is injected into the mould cavity (26) towards the fabric (4) inserted partly into the mould cavity (26) from the side pointing into the deployment channel (2).

8. Manufacturing method for an airbag device base module with a deployment channel (2) and at least one airbag cover support (3) for an airbag cover (18) in an outlet opening of the deployment channel (2) for an airbag,
a fabric (4) being integrated by moulding partly into the deployment channel (2) and partly into the airbag cover support (3),
**characterized in that**
on moulding of the fabric (4) partly into the deployment channel (2) and partly into the airbag cover support (3) an open fabric loop (7) is formed between the deployment channel (2) and the airbag cover support (3) such that it projects into the finished deployment channel (2) when the airbag cover support (3) is closed.

9. Manufacturing method for an airbag device base module according to Claim 8,
**characterized in that**
the length of the open fabric loop (7) is adjusted as a function of the method of production of an upper part (17; 19) covering the deployment channel (2) and the airbag cover support (3).

10. Manufacturing method for an airbag device base module according to Claim 9,
**characterized in that**
the length of the open fabric loop (7) is adjusted to be shorter in the case of an injection-moulded upper part (17) and longer in the case of a foamed upper part (19).

11. Manufacturing method for an airbag device base module according to one of Claims 8 to 10,
**characterized in that**,
in the case of the deployment channel (2), a circumferential flange (9) is formed around the outlet opening (8) thereof, which flange is located at least in the vicinity of the outlet opening (8) at least approximately in the same plane as the airbag cover support (3).

12. Manufacturing method for an airbag device base module according to Claim 11,
**characterized in that**
on formation of the circumferential flange (9) the fabric (4) is partly inserted into a mould cavity (25) and material to form the circumferential flange is injected into the mould cavity (25) towards the fabric (4) from the side which points in the direction in which the deployment channel (2) extends when viewed from the circumferential flange (9).

13. Manufacturing method for an airbag device base module according to one of Claims 8 to 12,
**characterized in that**
on formation of the airbag cover support (3) the fabric (4) is partly inserted into a mould cavity (26) and material for forming the airbag cover support (3) is injected into the mould cavity (26) towards the fabric (4) from the side which points into the deployment channel (2).

14. Manufacturing method for an airbag device base module according to one of Claims 8 to 13,
**characterized in that**
a common upper part (17; 19) is formed which covers on the one hand the airbag cover support (3) and on the other hand the deployment channel (2) around the outlet opening (8) or optionally the circumferential flange (9) of the deployment channel (2) around the outlet opening (8), which upper part in particular forms internal vehicle trim and preferably an instrument panel (14).

15. Manufacturing method for an airbag device base module according to Claim 14,
**characterized in that**
the upper part (17) is formed by plastics injection moulding, casting or rolling and in particular is connected by welding with the deployment channel (2), preferably optionally the circumferential flange (9) thereof, and/or with the at least one airbag cover support (3).

16. Manufacturing method for an airbag device base module according to Claim 14,
**characterized in that**
the upper part (19) is formed by forming a foam support (20) of plastics for in particular welding with the deployment channel (2), preferably optionally the circumferential flange (9) thereof, and/or with the at least one airbag cover support (3), by foaming a foam layer (21) thereon and by application or formation of an outer skin (slush) (22) thereon.

17. Manufacturing method for an airbag device base module according to one of Claims 8 to 16,
**characterized in that**,
to form the deployment channel (2), a circumferential flange (9), which lies at least in the vicinity of the outlet opening (8) at least approximately in the same plane as the airbag cover support (3), and a tubular channel portion (10) are formed about the outlet opening (8) of said deployment channel, and **in that** at least one bracing member (12) is formed between the channel portion (10) and the circumferential flange (9).

18. Manufacturing method for an airbag device base module according to one of Claims 8 to 17,
**characterized in that**
the deployment channel (2) and/or the airbag cover support (3) is/are formed at least substantially of plastics.

19. Airbag device base module (1), having a deployment channel (2) and at least one airbag cover support (3) for an airbag cover (18) in an outlet opening (8) of the deployment channel (2) for an airbag, the airbag cover support (3) being separate from the deployment channel (2) and connected articulatedly to the deployment channel (2) by means of a fabric (4), and the fabric (4) being integrated by moulding partly into the deployment channel (2) and partly into the airbag cover support (3),
**characterized in that**
the fabric (4) moulded partly into the deployment channel (2) and partly into the airbag cover support (3) forms an open fabric loop (7) between the deployment channel (2) and the airbag cover support (3), which loop projects into the deployment channel (2) when the airbag cover (18) is closed, manufactured according to one of Claims 8 to 18.

20. Airbag device base module according to Claim 19,
**characterized in that**
the fabric (4) is formed by a fabric mat (5).

21. Airbag device base module according to Claim 19 or 20,
**characterized in that**
the fabric (4) forms an open fabric loop (7) at the articulated joint (6) between the deployment channel (2) and the airbag cover support (3).

22. Airbag device base module according to Claim 21,
**characterized in that**
the length of the open fabric loop (7) is adjusted as a function of the method of production of an upper part (17; 19) covering the deployment channel (2) and the airbag cover support (3).

23. Airbag device base module according to Claim 22,
**characterized in that**
the length of the open fabric loop (7) is shorter in the case of an injection-moulded upper part (17) and longer in the case of a foamed upper part (19).

24. Airbag device base module according to one of Claims 19 to 23,
**characterized in that**
the airbag cover support (3) comprises welding ribs (11) at its surface pointing away from the deployment channel (2).

25. Airbag device base module according to one of Claims 19 to 24,
**characterized in that**
the deployment channel (2) has a circumferential flange (9) around its outlet opening (8), which flange lies at least in the vicinity of the outlet opening (8) at least approximately in the same plane as the airbag cover support (3).

26. Airbag device base module according to Claim 25,
**characterized in that**
the airbag cover support (3) is less thick than the circumferential flange (9) of the deployment channel (2).

27. Airbag device base module according to Claim 25 or 26,
**characterized in that**
the circumferential flange (9) comprises welding ribs (11) at its surface lying at least approximately in the plane of the outlet opening (8) of the deployment channel (2).

28. Airbag device base module according to one of Claims 19 to 27,
**characterized in that**
a common covering upper part (17; 19) is provided on the one hand for the airbag cover support (3) and on the other hand for the deployment channel (2) around the outlet opening (8), or for the circumferential flange (9) of the deployment channel (2) around the outlet opening (8), which upper part in particular forms internal vehicle trim and preferably an instrument panel (14).

29. Airbag device base module according to Claim 28,
**characterized in that**
the upper part (17) is formed by plastics injection moulding, casting or rolling and in particular is connected by welding with the deployment channel (2), preferably optionally the circumferential flange (9) thereof, and/or with the at least one airbag cover support (3).

30. Airbag device base module according to Claim 28,
**characterized in that**
the upper part (19) includes a foam support (20) of plastics for in particular welding with the deployment channel (2), preferably optionally the circumferential flange (9) thereof, and/or with the at least one airbag cover support (3), a foam layer (21) and an outer skin (slush) (22) in this order when viewed from the airbag cover support (3) and optionally circumferential flange (9).

31. Airbag device base module according to Claim 29 together with Claim 24 or 27,
**characterized in that**
the welding ribs (11) project only into the foam support (20).

32. Airbag device base module according to one of Claims 19 to 31,
**characterized in that**
the fabric (4) is partly integrated into the material of the deployment channel (2), such as in particular by encapsulation.

33. Airbag device base module according to Claim 32 together with one of Claims 25 to 31,
**characterized in that**
the fabric (4) is partly integrated into the material of the circumferential flange (9) of the deployment channel (2), such as in particular by encapsulation.

34. Airbag device base module according to Claim 33,
**characterized in that**
the fabric (4) in the circumferential flange (9) is closer to its surface lying in the plane of the outlet opening (8) of the deployment channel (2) than its surface pointing in the direction in which the deployment channel (2) extends when viewed from the circumferential flange (9).

35. Airbag device base module according to one of Claims 19 to 34,
**characterized in that**
the fabric (4) is partly integrated into the material of the airbag cover support (3), in particular by encapsulation.

36. Airbag device base module according to one of Claims 19 to 35, **characterized in that**
the fabric (4) in the airbag cover support (3) is closer to its surface pointing away from the deployment channel (2) than to its surface pointing into the deployment channel (2).

37. Airbag device base module according to one of Claims 19 to 36,
**characterized in that**
the airbag cover support (3) is connected to the deployment channel (2) by means of the fabric (4) in the manner of a hinge.

38. Airbag device base module according to one of Claims 19 to 37,
**characterized in that**
two airbag cover supports (3) are present.

39. Airbag device base module according to one of Claims 19 to 38,
**characterized in that**
the deployment channel (2) has a circumferential flange (9) around its outlet opening (8), which flange lies at least in the vicinity of the outlet opening (8) at least approximately in the same plane as the airbag cover support (3), and a tubular channel portion (10), and **in that** at least one bracing member (12) is arranged between the channel portion (10) and the circumferential flange (9).

40. Airbag device base module according to Claim 39,
**characterized in that**
the bracing member (12) is of rib-like construction.

41. Airbag device base module according to Claim 40,
**characterized in that**
the rib-like bracing member (12) is at least substantially triangular.

42. Airbag device base module according to Claim 40 or 41,
**characterized in that**
a plurality of bracing members (12) are arranged around the circumference of channel portion (10) and circumferential flange (9).

43. Airbag device base module according to one of Claims 19 to 42,
**characterized in that**
the deployment channel (2) and/or the airbag cover support (3) is/are formed at least substantially of plastics.

44. Airbag device (13) having a gas generator (15) and an airbag (16), which are arranged behind at least one airbag cover (18), which is designed to open as a result of triggering of the gas generator (15) and/or by inflation of the airbag (16), in order to allow the airbag (16) to exit through the outlet opening (8) uncovered by opening of the airbag cover (18),
**characterized in that**
an airbag device base module (1) according to one of Claims 19 to 43 is additionally included.

45. Airbag device according to Claim 44,
**characterized in that**
the airbag (16) is connected fixedly to the gas generator (15), and **in that** the gas generator (15) may be mounted relative to or on the deployment channel (2).

## Revendications

1. Outil de fabrication (23) d'un module de base pour un dispositif d'airbag,
dans lequel il est prévu des empreintes (25, 26) à remplir avec un matériau destiné à la formation d'un canal de tir (2) et d'un support de clapet d'airbag (3) et destiné à recevoir un tissu (4) reliant celles-ci de manière articulée, qui est surmoulé en partie dans le canal de tir (2) et en partie dans le support de clapet d'airbag (3),
**caractérisé en ce que** les empreintes (25, 26) sont reliées par un espace de maintien (29) destiné à recevoir le tissu (4), et **en ce qu'**un insert (30) pénètre dans l'espace de maintien (29) destiné à recevoir le tissu (4) ou passe à travers cet espace, de telle manière qu'avec un tissu (4) introduit dans l'espace de maintien (29), ce tissu forme une boucle de tissu ouverte (7) au moyen de l'insert (30).

2. Outil de fabrication d'un module de base pour un dispositif d'airbag selon la revendication 1, **caractérisé en ce qu'**il est prévu en face de l'insert (30) un espace de réception (31) destiné à contenir l'insert (30) entouré par le tissu (4).

3. Outil de fabrication d'un module de base pour un dispositif d'airbag selon la revendication 1 ou 2, **caractérisé en ce qu'**il se trouve en face de l'insert (30) des moyens de pression (32), qui sont conçus pour l'application étroite du tissu (4) sur l'insert (30).

4. Outil de fabrication d'un module de base pour un dispositif d'airbag selon la revendication 3, **caractérisé en ce que** les moyens de pression (32) contiennent un ressort de pression (33).

5. Outil de fabrication d'un module de base pour un dispositif d'airbag selon l'une quelconque des revendications 2 à 4, **caractérisé en ce que** l'insert (30) est réglable en longueur.

6. Outil de fabrication d'un module de base pour un dispositif d'airbag selon l'une quelconque des revendications précédentes, **caractérisé en ce que** l'empreinte (25) à remplir avec un matériau destiné à la formation d'une bride périphérique (9) du canal de tir (2) est munie d'une buse d'injection de matériau (27), qui est disposée de telle manière que le matériau destiné à la formation de la bride périphérique (9) soit injecté dans l'empreinte (25) contre le tissu (4) introduit en partie dans l'empreinte (25) à partir du côté qui, vu de la bride périphérique (9), est orienté en direction du tracé du canal de tir (2).

7. Outil de fabrication d'un module de base pour un dispositif d'airbag selon l'une quelconque des revendications précédentes, **caractérisé en ce que** l'empreinte (26) à remplir avec un matériau destiné à la formation du support de clapet d'airbag (3) est munie d'une buse d'injection de matériau (28), qui est disposée de telle manière que le matériau destiné à la formation du support de clapet d'airbag (3) soit injecté dans l'empreinte (26) contre le tissu (4) introduit en partie dans l'empreinte (26), à partir du côté qui est orienté vers l'intérieur du canal de tir (2).

8. Procédé de fabrication d'un module de base pour un dispositif d'airbag avec un canal de tir (2) et au moins un support de clapet d'airbag (3) d'un clapet d'airbag (18) dans une ouverture de sortie du canal de tir (2) pour un airbag, dans lequel un tissu (4) est intégré en partie dans le canal de tir (2) et en partie dans le support de clapet d'airbag (3) par surmoulage, **caractérisé en ce que**, lors du surmoulage du tissu (4) en partie dans le canal de tir (2) et en partie dans le support de clapet d'airbag (3), on forme entre le canal de tir (2) et le support de clapet d'airbag (3) une boucle de tissu ouverte (7) de telle manière qu'elle pénètre dans le canal de tir prévu (2) lorsque le support de clapet d'airbag (3) est fermé.

9. Procédé de fabrication d'un module de base pour un dispositif d'airbag selon la revendication 8, **caractérisé en ce que** l'on règle la longueur de la boucle de tissu ouverte (7) en fonction du type de fabrication d'une partie supérieure (17; 19) recouvrant le canal de tir (2) et le support de clapet d'airbag (3).

10. Procédé de fabrication d'un module de base pour un dispositif d'airbag selon la revendication 9, **caractérisé en ce que** l'on règle une longueur de la boucle de tissu ouverte (7) plus courte pour le cas d'une partie supérieure (17) injectée et plus longue pour le cas d'une partie supérieure (19) en mousse.

11. Procédé de fabrication d'un module de base pour un dispositif d'airbag selon l'une quelconque des revendications 8 à 10, **caractérisé en ce que** l'on forme, autour de l'ouverture de sortie (8) du canal de tir (2), une bride périphérique (9) qui se situe, au moins à proximité de l'ouverture de sortie (8), au moins approximativement dans le même plan que le support de clapet d'airbag (3).

12. Procédé de fabrication d'un module de base pour un dispositif d'airbag selon la revendication 11, **caractérisé en ce que**, lors de la formation de la bride périphérique (9), on introduit le tissu (4) en partie dans une empreinte (25) et on injecte du matériau destiné à la formation de la bride périphérique (9) dans l'empreinte (25) contre le tissu (4) à partir du côté qui, vu de la bride périphérique (9), est orienté en direction du tracé du canal de tir (2).

13. Procédé de fabrication d'un module de base pour un dispositif d'airbag selon l'une quelconque des revendications 8 à 12, **caractérisé en ce que**, lors de la formation du support de clapet d'airbag (3), on introduit le tissu (4) en partie dans une empreinte (26) et on injecte du matériau destiné à la formation du support de clapet d'airbag (3) dans l'empreinte (26) contre le tissu (4), à partir du côté qui est orienté vers l'intérieur du canal de tir (2).

14. Procédé de fabrication d'un module de base pour un dispositif d'airbag selon l'une quelconque des revendications 8 à 13, **caractérisé en ce que** l'on forme une partie supérieure commune (17; 19) recouvrant d'une part le support de clapet d'airbag (3) et d'autre part le canal de tir (2) autour de l'ouverture de sortie (8) ou éventuellement la bride périphérique (9) du canal de tir (2) autour de l'ouverture de sortie (8), partie supérieure qui forme en particulier un habillage intérieur du véhicule et de préférence un tableau de bord (14).

15. Procédé de fabrication d'un module de base pour un dispositif d'airbag selon la revendication 14, **caractérisé en ce que** l'on forme la partie supérieure (17) par injection, coulée ou laminage de matière plastique et on l'assemble par soudage en particulier au canal de tir (2), de préférence éventuellement à la bride périphérique (9) de celui-ci et/ou audit au moins un support de clapet d'airbag (3).

16. Procédé de fabrication d'un module de base pour un dispositif d'airbag selon la revendication 14, **caractérisé en ce que** l'on forme la partie supérieure (19) par formation d'un support de mousse (20) en matière plastique notamment à souder au canal de tir (2), de préférence éventuellement à la bride périphérique (9) de celui-ci et/ou audit au moins un support de clapet d'airbag (3), par moussage d'une couche de mousse (21) sur celui-ci et par dépôt ou formation d'une peau extérieure (pâte) (22) sur celui-ci.

17. Procédé de fabrication d'un module de base pour un dispositif d'airbag selon l'une quelconque des revendications 8 à 16, **caractérisé en ce que**, pour la formation du canal de tir (2), on forme autour de son ouverture de sortie (8) une bride périphérique (9), qui est située, au moins à proximité de l'ouverture de sortie (8), au moins approximativement dans le même plan que le support de clapet d'airbag (3), et une section de canal tubulaire (10), de telle manière qu'au moins un renfort (12) soit formé entre la section de canal (10) et la bride périphérique (9).

18. Procédé de fabrication d'un module de base pour un dispositif d'airbag selon l'une quelconque des revendications 8 à 17, **caractérisé en ce que** l'on forme le canal de tir (2) et/ou le support de clapet d'airbag (3) au moins essentiellement en matière plastique.

19. Module de base pour un dispositif d'airbag (1), avec un canal de tir (2) et au moins un support de clapet d'airbag (3) d'un clapet d'airbag (18) dans une ouverture de sortie (8) du canal de tir (2) pour un airbag, dans lequel le support de clapet d'airbag (3) articulée au canal de tir (2) au moyen d'un tissu (4), et dans lequel le tissu (4) est intégré en partie dans le canal de tir (2) et en partie dans le support de clapet d'airbag (3) par surmoulage, **caractérisé en ce que** le tissu (4) surmoulé en partie dans le canal de tir (2) et en partie dans le support de clapet d'airbag (3) forme entre le canal de tir (2) et le support de clapet d'airbag (3) une boucle de tissu ouverte (7), qui pénètre dans le canal de tir (2), fabriqué selon l'une quelconque des revendications 8 à 18, lorsque le clapet d'airbag (18) est fermé.

20. Module de base pour un dispositif d'airbag selon la revendication 19, **caractérisé en ce que** le tissu (4) est formé par une nappe de tissu (5).

21. Module de base pour un dispositif d'airbag selon la revendication 19 ou 20, **caractérisé en ce que** le tissu (4) forme une boucle de tissu ouverte (7) à la liaison articulée (6) entre le canal de tir (2) et le support de clapet d'airbag (3).

22. Module de base pour un dispositif d'airbag selon la revendication 21, **caractérisé en ce que** la longueur de la boucle de tissu ouverte (7) est réglée en fonction du type de fabrication d'une partie supérieure (17; 19) recouvrant le canal de tir (2) et le support de clapet d'airbag (3).

23. Module de base pour un dispositif d'airbag selon la revendication 22, **caractérisé en ce que** la longueur de la boucle de tissu ouverte (7) est plus courte pour le cas d'une partie supérieure injectée (17) et plus longue pour le cas d'une partie supérieure en mousse (19).

24. Module de base pour un dispositif d'airbag selon l'une quelconque des revendications 19 à 23, présente des nervures de soudage (11) sur sa surface orientée à l'opposé du canal de tir (2).

25. Module de base pour un dispositif d'airbag selon l'une quelconque des revendications 19 à 24, **caractérisé en ce que** le canal de tir (2) comporte autour de son ouverture de sortie (8) une bride périphérique (9) qui est située, au moins à proximité de l'ouverture de sortie (8), au moins approximativement dans le même plan que le support de clapet d'airbag (3).

26. Module de base pour un dispositif d'airbag selon la revendication 25, **caractérisé en ce que** le support de clapet d'airbag (3) présente une épaisseur plus faible que la bride périphérique (9) du canal de tir (2).

27. Module de base pour un dispositif d'airbag selon la revendication 25 ou 26, **caractérisé en ce que** la bride périphérique (9) présente des nervures de soudage (11) sur sa surface située au moins approximativement dans le plan de l'ouverture de sortie (8) du canal de tir (2).

28. Module de base pour un dispositif d'airbag selon l'une quelconque des revendications 19 à 27, **caractérisé en ce que** d'une part le support de clapet d'airbag (3) et d'autre part le canal de tir (2) autour de l'ouverture de sortie (8) ou la bride périphérique (9) du canal de tir (2) autour de l'ouverture de sortie (8), présentent une partie supérieure commune de couverture (17; 19), qui forme en particulier un habillage intérieur du véhicule et de préférence un tableau de bord (14).

29. Module de base pour un dispositif d'airbag selon la revendication 28, **caractérisé en ce que** la partie laminage de matière plastique et est assemblée par soudage en particulier au canal de tir (2), de préférence éventuellement à la bride périphérique (9) de celui-ci et/ou audit au moins un support de clapet d'airbag (3).

30. Module de base pour un dispositif d'airbag selon la revendication 28, **caractérisé en ce que** la partie supérieure (19) comprend un support de mousse (20) en matière plastique en particulier pour le soudage au canal de tir (2), de préférence éventuellement à la bride périphérique (9) de celui-ci, et/ou audit au moins un support de clapet d'airbag (3), une couche de mousse (21) et une peau extérieure (pâte) (22) dans cet ordre, considéré à partir du support de clapet d'airbag (3) et éventuellement de la bride périphérique (9).

31. Module de base pour un dispositif d'airbag selon la revendication 29 en liaison avec la revendication 24 ou 27, **caractérisé en ce que** les nervures de soudage (11) ne pénètrent que dans le support de mousse (20).

32. Module de base pour un dispositif d'airbag selon l'une quelconque des revendications 19 à 31, **caractérisé en ce que** le tissu (4) est intégré en partie dans le matériau du canal de tir (2), comme notamment par surmoulage.

33. Module de base pour un dispositif d'airbag selon la revendication 32 en liaison avec l'une quelconque des revendications 25 à 31, **caractérisé en ce que** le tissu (4) est intégré en partie dans le matériau de la bride périphérique (9) du canal de tir (2), comme notamment par surmoulage.

34. Module de base pour un dispositif d'airbag selon la revendication 33, **caractérisé en ce que** le tissu (4) est situé dans la bride périphérique (9) plus près de (8) du canal de tir (2) que de sa surface orientée en direction du tracé du canal de tir (2), vue depuis la bride périphérique (9).

35. Module de base pour un dispositif d'airbag selon l'une quelconque des revendications 19 à 34, **caractérisé en ce que** le tissu (4) est intégré en partie dans le matériau du support de clapet d'airbag (3), comme notamment par surmoulage.

36. Module de base pour un dispositif d'airbag selon l'une quelconque des revendications 19 à 35, **caractérisé en ce que** le tissu (4) est situé dans le support de clapet d'airbag (3) plus près de sa surface orientée à l'opposé du canal de tir (2) que de sa surface orientée vers l'intérieur du canal de tir (2).

37. Module de base pour un dispositif d'airbag selon l'une quelconque des revendications 19 à 36, **caractérisé en ce que** le support de clapet d'airbag (3) est relié au canal de tir (2) à la manière d'une charnière pelliculaire au moyen du tissu (4).

38. Module de base pour un dispositif d'airbag selon l'une quelconque des revendications 19 à 37, **caractérisé en ce qu'**il se trouve deux supports de clapet d'airbag (3).

39. Module de base pour un dispositif d'airbag selon l'une quelconque des revendications 19 à 38, **caractérisé en ce que** le canal de tir (2) comporte, autour de son ouverture de sortie (8), une bride périphérique (9) qui se situe, au moins à proximité de l'ouverture de sortie (8), au moins approximativement dans le même plan que le support de clapet d'airbag (3), et une section de canal tubulaire (10), et **en ce qu'**au moins un renfort (12) est disposé entre la section de canal (10) et la bride périphérique (9).

40. Module de base pour un dispositif d'airbag selon la revendication 39, **caractérisé en ce que** le renfort (12) est réalisé en forme de nervure.

41. Module de base pour un dispositif d'airbag selon la revendication 40, **caractérisé en ce que** le renfort en forme de nervure (12) est réalisé au moins essentiellement sous forme triangulaire.

42. Module de base pour un dispositif d'airbag selon la revendication 40 ou 41, **caractérisé en ce qu'**il se trouve une pluralité de renforts (12) autour de la périphérie de la section de canal (10) et de la bride périphérique (9).

43. Module de base pour un dispositif d'airbag selon l'une quelconque des revendications 19 à 42, **caractérisé en ce que** le canal de tir (2) et/ou le support de clapet d'airbag (3) est/sont formé(s) au moins essentiellement en matière plastique.

44. Dispositif d'airbag (13), avec un générateur de gaz (15) et un airbag (16), qui sont disposés derrière au moins un clapet d'airbag (18), qui doit s'ouvrir par suite d'un déclenchement du générateur de gaz (15) et/ou du gonflage de l'airbag (16) qui en résulte, afin de laisser sortir l'airbag (16) à travers l'ouverture de sortie (8) libérée par l'ouverture du clapet d'airbag (18), **caractérisé en ce qu'**il contient en outre un module de base pour un dispositif d'airbag (1) selon l'une quelconque des revendications 19 à 43.

45. Dispositif d'airbag selon la revendication 44, **caractérisé en ce que** l'airbag (16) est solidaire du générateur de gaz (15) et **en ce que** le générateur de gaz (15) peut être fixé par rapport au ou sur le canal de tir (2).
